(19) Europäisches Patentamt
European Patent Office
Office européen des brevets

(11) Publication number: **0 272 439 B1**

(12) **EUROPEAN PATENT SPECIFICATION**

(45) Date of publication of patent specification: **15.01.92**

(51) Int. Cl.5: **C08G 81/00**, C08L 71/12, C08L 67/00, //(C08L71/12, 67:00),(C08L67/00,71:12)

(21) Application number: **87116790.4**

(22) Date of filing: **13.11.87**

(54) **Polyphenylene ether polyester copolymer-containing resin compositions.**

(30) Priority: **14.11.86 JP 271014/86**
**14.11.86 JP 271016/86**

(43) Date of publication of application:
**29.06.88 Bulletin 88/26**

(45) Publication of the grant of the patent:
**15.01.92 Bulletin 92/03**

(84) Designated Contracting States:
**DE FR GB IT NL**

(56) References cited:
**EP-A- 0 142 294**
**US-A- 3 703 564**

**PATENT ABSTRACTS OF JAPAN, vol. 9, no. 247, 3rd October 1985; (C-307)[1970], & JP-A-60 104 156 (TOYO BOSEKI K.K.) 08-06-1985**

(73) Proprietor: **MITSUBISHI PETROCHEMICAL CO., LTD.**
**5-2, 2-chome, Marunouchi**
**Chiyoda-ku Tokyo 100(JP)**

(72) Inventor: **Inoue, Takayuki**
**c/o Mitsubishi Petrochemical Co., Ltd. 1, Toho-cho**
**Yokkaichi-shi Mie(JP)**
Inventor: **Takahashi, Hiroshi**
**c/o Mitsubishi Petrochemical Co., Ltd. 1, Toho-cho**
**Yokkaichi-shi Mie(JP)**
Inventor: **Kihira, Michiharu**
**c/o Mitsubishi Petrochemical Co., Ltd. 1, Toho-cho**
**Yokkaichi-shi Mie(JP)**
Inventor: **Yamauchi, Shin-ichi**
**c/o Mitsubishi Petrochemical Co., Ltd. 1, Toho-cho**
**Yokkaichi-shi Mie(JP)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

Inventor: **Mayumi, Junji**
**c/o Mitsubishi Petrochemical Co., Ltd. 1, Toho-cho**
**Yokkaichi-shi Mie(JP)**
Inventor: **Goto, Teruhisa**
**c/o Mitsubishi Petrochemical Co., Ltd. 1, Toho-cho**
**Yokkaichi-shi Mie(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

## Description

This invention relates to a resin composition containing a polyphenylene ether•polyester copolymer obtained by reacting an epoxidized polyphenylene ether and a thermoplastic polyester (hereinafter referred to as "the polyphenylene ether•polyester copolymer").

The polyphenylene ether•polyester copolymer itself is a molding material excellent in solvent resistance, molding property, mechanical properties, etc., and also can provide a resin composition having improved solvent resistance, oil resistance, and molding property by adding thereto a polyphenylene ether and a thermoplastic polyester.

A polyphenylene ether has high heat resistance and is excellent in strength, electric characteristics, and dimensional preciseness but since a polyphenylene ether is liable to be corroded by solvents, e.g., aromatic hydrocarbons such as benzene, etc., and halogenated hydrocarbons such as trichloroethylene (trichlene®), etc., and also is poor in moldability, it is difficult to form molded articles of itself.

For improving the moldability of a polyphenylene ether, a method of diluting it with a polystyrene-series resin is proposed but although the moldability thereof is improved, the solvent resistance of the polyphenylene ether cannot be improved by the addition of a polystyrene-series resin since a polystyrene-series resin itself is also corroded by aromatic hydrocarbons such as benzene, etc., and halogenated hydrocarbons such as trichloroethylene (trichlene®), etc.

For improving the moldability and also the solvent resistance of a polyphenylene ether, it may be considered to add a polyester-series resin but even when a polyphenylene ether is mixed with a polyester, they are not uniformly dispersed to form large particle size portions, which results in reducing the mechanical strength to an extent of making the resin mixture unsuitable for practical use.

US 3 703 564 discloses block copolymers of the A-B-A type where each A is the phenoxy residue of a poly(2,6-disubstituted-1,4-phenylene oxide) having one terminal hydroxyl per polymer molecule and B is the residue of a compound having two groups which are reactive with the hydroxyl group of said poly-(phenylene oxide).

A preferred block copolymer is for instance a bis[poly-(2,6-dimethyl-1,4-phenylene oxide)] carboxylate.

As the result of various investigations for solving the above-described problems taking into consideration of that a polyphenylene ether and a polyester can be uniformly and finely dispersed by compounding a copolymer of a polyphenylene ether and polyester, the inventors have accomplished the present invention.

That is, the invention provides a resin composition containing a polyphenylene ether•polyester copolymer obtained by reacting a polyphenylene ether having epoxy group and a polyester, wherein the reaction is a solution reaction or a melt reaction, the molten state reaction being carried out at a temperature of from 260°C to 350°C, wherein the polyphenylene ether having epoxy group is prepared by epoxidizing a polyphenylene ether being based on at least one monocyclic phenol represented by formula I

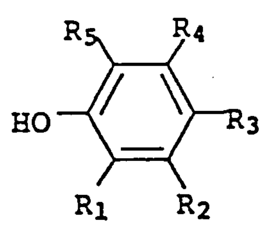

(I)

wherein $R_1$, $R_2$, $R_3$, $R_4$ and $R_5$ each represents a hydrogen, a halogenated hydrocarbon group, a hydrocarbon group or a substituted hydrocarbon group, wherein said polyphenylene ether has an intrinsic viscosity (measured in chloroform at 30°C) of from 0.10 to 0.60, and wherein said polyester is a thermoplastic polyester having an intrinsic viscosity (measured at 30°C in a mixture of phenol and tetrachloroethane at 1:1 by weight ratio) of from 0.35 to 1.5.

The epoxidized polyphenylene ether which is used in the present invention is preferably a terminal-epoxidized polyphenylene ether.

The resin composition containing such a polyphenylene ether•polyester copolymer has improved moldability, solvent resistance, and oil resistance without much reducing the heat resistance, strength, electric characteristics, etc., which are the features of polyphenylene ether.

The invention further provides a resin composition containing the above-described polyphenylene

ether•polyester copolymer further added with a polyphenylene ether and a thermoplastic polyester.

The above resin composition also has improved solvent resistance and moldability without much reducing the heat resistance, strength, and electric characteristics, which are the features of the polyphenylene ether.

Drawing is a graph showing an infrared absorption spectrum of the polyphenylene ether•polyester copolymer obtained in Example 1.

Then, the invention is explained in detail.

The polyphenylene ether which is used for obtaining the polyphenylene ether•polyester copolymer in this invention is a homopolymer or a copolymer obtained by subjecting at least one monocyclic phenol represented by the following formula (I) and includes a graft copolymer formed by grafting a vinyl aromatic compound into the skeleton of polyphenylene ether;

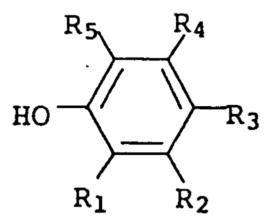

(I)

wherein $R_1$, $R_2$, $R_3$, $R_4$, and $R_5$ each represents a hydrogen, a halogenated hydrocarbon group, a hydrocarbon group, or a substituted hydrocarbon group.

Specific examples of the monocyclic phenol compound represented by the formula (I) described above are 2,6-dimethylphenol, 2,6-diphenylphenol, 2,3,6-trimethylphenol, 2,6-diisopropylphenol, 2-methyl-6-isopropylphenol, 2-methyl-6-t-butylphenol, etc. For the monocyclic phenol compound, cresol, 2,4,6-trimethylphenol, etc., can be used as a small part of the copolymer components thereof.

Specific examples of the graft copolymer are a graft copolymer formed by grafting a small amount of a styrene-series polymer as a vinyl aromatic compound to polyphenylene ether, etc.

The polyphenylene ether for use as a raw material for epoxidized polyphenylene ether which is used in this invention can be prepared by known methods as described, e.g., in U.S. Patents 3,306,874, 3,306,875, 3,257,357, 3,257,358, etc.

The polyphenylene ether for use in this invention is a resin having an intrinsic viscosity (measured in chloroform at 30 °C) in the range of from 0.10 to 0.60, preferably from 0.20 to 0.57, and particularly preferably from 0.25 to 0.55. If the intrinsic viscosity is less than 0.10, the resin loses the features as polyphenylene ether after forming a copolymer thereof with polyester, which is against the purport of this invention. Also, if the intrinsic viscosity is over 0.60, even if a copolymer thereof with polyester is formed, kneading, granulation, and molding of the polyphenylene ether•polyester copolymer are too difficult to use for practical purposes.

## Production Method of Polyphenylene Ether Having Epoxy Group

The polyphenylene ether having epoxy group is a polyphenylene ether having introduced therein an epoxy group and in this case, it is preferred to epoxidize the terminal of the polyphenylene ether.

The epoxidized polyphenylene ether can be obtained by contacting a polyphenylene ether with a compound having epoxy group under heating. It is preferred for the reaction to utilize a condensation reaction of a polyphenylene ether and an epoxy compound having halogen, etc., which can react with the hydroxy group of the polyphenylene ether.

The practical production method is as follows. When the compound having epoxy group is liquid in the reaction temperature and also can dissolve therein a polyphenylene ether, the compound having epoxy group can be used as a reaction component and solvent for the reaction. Also, when the compound having epoxy group is solid at the reaction temperature or does not dissolve a polyphenylene ether, a solvent which is good solvent for both the polyphenylene ether and the epoxy compound and does not take part in the reaction, for example, an aromatic hydrocarbon such as benzene, toluene, etc., or a halogenated hydrocarbon such as chloroform, etc., is used.

As the compound having epoxy group, an epoxy compound having one halogenated terminal or a both terminal-epoxidized compound can be preferably used.

Specific examples of the one terminal-epoxidized compound are epichlorohydrin, 2-methylepichlorohydrin, etc., and specific examples of both terminal-epoxidized compound are 2,2-bis(4-glycidylphenyl ether)propane, an epoxy resin, etc. In this invention, the one terminal-epoxidized compound is particularly preferred from the view point of restraining the occurrence of blocking of polyphenylene ethers each other.

As to the ratio of the compound having epoxy group, which is used for the epoxidation, and a polyphenylene ether, the amount of the epoxy group is preferably at least 1.0 mol, and more preferably at least 1.5 mol per mol of the phenol group of the polyphenylene ether.

For accelerating the reaction, an alkali compound can be used. There is no particular restriction on the alkali compound but sodium hydroxide, potassium hydroxide, etc., are suitable. The addition amount thereof is at least 1.0 equivalent, preferably at least 1.2 equivalent, and particularly preferably at least 1.5 equivalent with respect to the epoxy group. The alkali compound is added to the reaction system as an aqueous solution thereof but for accelerating the reaction, it is important to reduce the content of water in the reaction system and hence it is desired that the alkali compound is dissolved in water at a concentration as high as possible.

The reaction temperature is preferably in the range of from about 80°C to 120°C and the reaction time is usually from one hour to 6 hours. Also, it is possible to shorten the reaction time by increasing the temperature above 100°C during the reaction, reducing the pressure in the reaction system, or removing water in the reaction system by bubbling with nitrogen gas, etc.

After the reaction is over, the system is cooled and when the system reaches about ordinary temperature, a solvent which does not dissolve polyphenylene ether, such as cold methanol, etc., is added to the reaction system to form precipitates and thus an epoxidized polyphenylene ether is obtained.

Thereafter, the precipitates thus formed are collected by filtration and then washed with water and methanol to remove unreacted epoxy compound and alkali compound. Then, the precipitates are collected by filtration and dried at 100°C to 150°C under reduced pressure or atmospheric pressure to provide an epoxidized polyphenylene ether.

## Determination of Epoxidized Polyphenylene Ether

The introduced ratio of epoxy group into a polyphenylene ether can be calculated by determining the unreacted phenol groups of the polyphenylene ether by an ultraviolet absorption spectral method. Practically, the product is dissolved in a halogenated hydrocarbon such as dichloromethane, an aminic basic solution is added dropwise to the solution to dissociate the phenolic hydroxy group into a phenoxy anion, and the anion is measured from the absorption intensity using wavelength of 320 mμ. The epoxidation ratio of the phenol group is at least 45 mol%, preferably at least 60 mol%, and more preferably at least 80 mol% of the phenol group.

## Polyester

The polyester which is used for obtaining the polyphenylene ether•polyester copolymer in this invention has ester bond in the main chain of the molecule. Specific examples of the polyester are a polycondensated polyester obtained from a dicarboxylic acid or the derivative thereof and a dihydric alcohol or a dihydric phenol compound, a polycondensed polyester obtained from a dicarboxylic acid or the derivative thereof and a cyclic ether compound, a polycondensed polyester obtained from a metal salt of a dicarboxylic acid and a dihalogen compound, and a polyester obtained by an open chain polymerization of a cyclic ester compound. In addition, the derivatives of dicarboxylic acid include acid anhydrides, esterified compounds, and acid chlorides. The dicarboxylic acid may be aliphatic dicarboxylic acid or aromatic dicarboxylic acid and examples thereof are terephthalic acid, isophthalic acid, phthalic acid, chlorophthalic acid, oxalic acid, succinic acid, adipic acid, etc. Of these compounds, aromatic dicarboxylic acids are preferred and terephthalic acid, isophthalic acid, and phthalic acid are particularly preferred.

Examples of the dihydric alcohol are ethylene glycol, propylene glycol, butane-1,4-diol, hexamethylene glycol, etc., and ethylene glycol and butane-1,4-diol are preferred. Examples of the dihydric phenol compound are bisphenol A, resorcinol, etc. Examples of the cyclic ether compound are ethylene oxide, propylene oxide, etc. Also, examples of the cyclic compound are ε-caprolacton, etc.

The dihalogen compound which is reacted with the metal slat of dicarboxylic acid is a compound obtained by substituting two hydroxy groups of the above-described dihydric alcohol or dihydric phenol compound with halogen atom such as chlorine or bromine.

The thermoplastic polyester which is used for obtaining the above-described polyphenylene ether•-polyester copolymer in this invention can be produced by a known method using the above-described raw materials and as to the molecular weight of the polyester, the intrinsic viscosity measured at 30°C using a

mixture of phenol and tetrachloroethane at 1:1 by weight ratio is the range of from 0.35 to 1.5, and preferably from 0.40 to 1.4. If the intrinsic viscosity of polyester is less than 0.35, in the case of melt-kneading the polyester with a polyphenylene ether, the product is lacking in the features as thermoplastic polyester resin, which is against the objects of this invention.

Reaction of Epoxidized Polyphenylene Ether and Polyester

The reaction of the epoxidized polyphenylene ether and polyester may be a solution reaction or a melt reaction but it is preferred to perform the reaction in molten state. For reacting in molten state, a kneading machine for general plastics, such as Brabender, a screw extruding machine, a roll kneading machine, a Banbury type kneading machine, etc., can be used. The reaction temperature is a temperature at which polyphenylene ether and polyester can be sufficiently molten and kneaded, that is from 260°C to 350°C, preferably from 270°C to 330°C, and particularly preferably from 280°C to 310°C. If the reaction temperature is less than 260°C, polyester is reluctant to melt and if the reaction temperature is over 350°C, epoxy groups react with each other and the polymer formed gels, which is unsuitable for the purpose of this invention.

As to the compounding ratio of the epoxidized polyphenylene ether and polyester, a carboxy group of the polyester calculated from the number average molecular weight of the polyester is in the range of preferably from 0.5 mol to 1.5 mol, and particularly preferably from 0.8 mol to 1.2 mol per mol of the epoxy group determined by an ultraviolet absorption spectral method.

When the product is obtained as a mixture containing the unreacted raw materials and is used as additives for various resins, the mixture can be directly used as it is.

In the case of separating unreacted polyphenylene ether from the reaction mixture, it can be extracted off using a solvent which dissolves the polyphenylene ether but does not dissolve the polyester, for example, a halogenated hydrocarbon such as chloroform, etc., or an aromatic hydrocarbon such as xylene, etc., but it is suitable to extract unreacted polyphenylene ether using an aromatic hydrocarbon such as xylene at the boiling point thereof.

The polyphenylene ether•polyester copolymer in this invention contains a copolymer of a structure that the polyphenylene ether is bonded to the polyester by an epoxy compound, such as the structure represented by the following formula (II), (III), (IV) or (V):

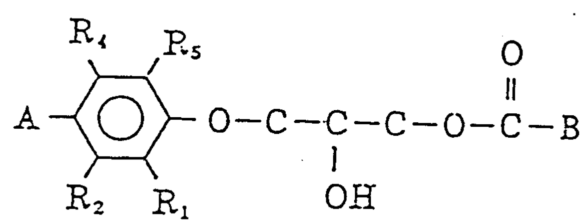

(II)

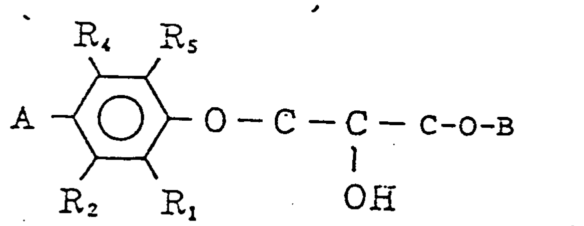

(III)

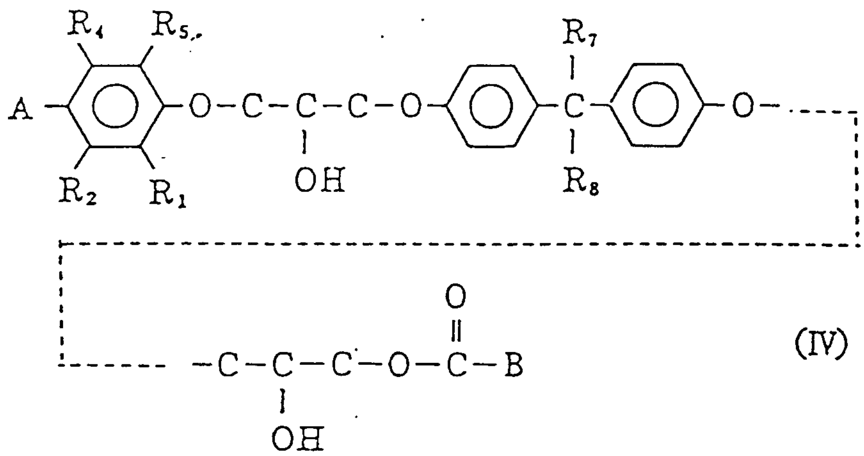

(IV)

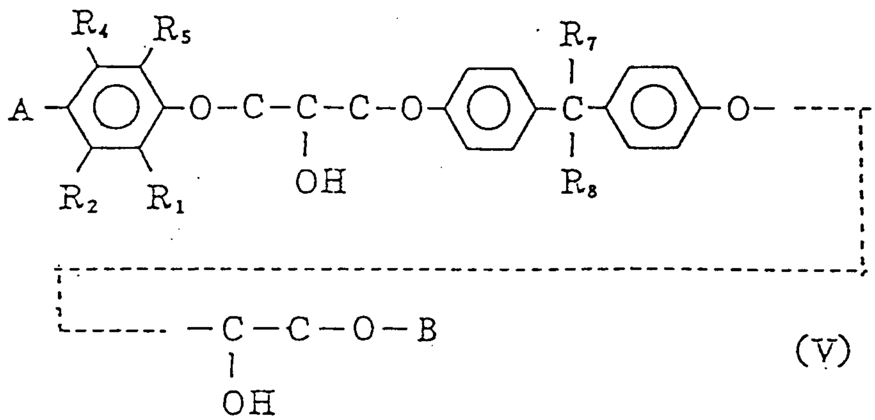

(V)

wherein $R_1$ to $R_5$ each means the same substituent as defined above in the formula (I); $R_7$ and $R_8$ each. represents a hydrogen atom or an alkyl group having 1 to 3 carbon atoms; A represents a polyphenylene ether; and B represents a polyester.

Addition of Resins to Polyphenylene Ether•Polyester Copolymer

The copolymer of polyphenylene ether having epoxy group and polyester obtained by the above-described reaction can be used by itself and further a polyphenylene ether and a thermoplastic polyester can be added to the polyphenylene ether•polyester copolymer for satisfying the above-described objects of this invention.

As the polyphenylene ether being added to the polyphenylene ether•polyester copolymer, the polyphenylene ether which is used for the above-described epoxidation can be, in principle, used. However, in this case, the preferred range of the molecular weight differs a little. That is, the intrinsic viscosity thereof measured at 30°C using chloroform as the solvent is in the range of from 0.15 to 0.65, preferably from 0.3 to 0.6. If the intrinsic viscosity is less than 0.15, the composition obtained is brittle and the mechanical strength is undesirably reduced. Also, if the intrinsic viscosity is over 0.65, the difference in viscosity between the polyphenylene ether and a thermoplastic polyester is too large to give good dispersion, whereby the objects of this invention are not attained.

Also, as the thermoplastic polyester which is added to the aforesaid polyphenylene ether•polyester copolymer, the polyester described above can be, in principle, used. However, the molecular weight thereof is as follows. That is, the intrinsic viscosity thereof measured at 30°C using a mixture of phenol and tetrachloroethane at 1:1 by weight ratio is in the range of preferably from 0.50 to 1.5, and particularly preferably from 0.55 to 1.2. If the intrinsic viscosity is less than 0.50, good mechanical properties are not obtained in the case of melt-kneading the polyester with a polyphenylene ether.

The compounding ratios of the above-described polyphenylene ether•polyester copolymer, a polyphenylene ether and a polyester are as follows. That is, the proportion of the polyphenylene ether•polyester

copolymer is from 2 to 80 parts by weight, preferably from 5 to 75 parts by weight, and more preferably from 8 to 70 parts by weight, the proportion of the polyphenylene ether and/or the polyphenylene ether having epoxy group left unreacted in the reaction of forming the aforesaid polyphenylene ether•polyester copolymer is from 10 to 80 parts by weight, preferably from 15 to 75 parts by weight, and more preferably from 20 to 70 parts by weight, and the proportion of the thermoplastic polyester is from 10 to 80 parts by weight, preferably from 15 to 75 parts by weight, and more preferably from 20 to 70 parts by weight, each per 100 parts by weight of the total amount of the polyphenylene ether•polyester copolymer, the polyphenylene ether and/or the polyphenylene ether having epoxy group and the polyester.

If the proportion of the polyphenylene ether•polyester copolymer is less than 2 parts by weight, per 100 parts by weight of the total amount of the polyphenylene ether•polyester copolymer, the polyphenylene ether and/or the polyphenylene ether having epoxy group and the polyester, good uniform and fine dispersion of polyphenylene ether and polyester is not obtained.

The composition of this invention may further contain various additives, e.g., an antioxidant, an ultraviolet ray absorbent, a plasticizer, a lubricant, a flame retarder, a flame retarder assistant, an antistatic agent, a conductivity imparting agent, a coloring agent, a multifunctional crosslinking agent, a fibrous reinforcing agent such as glass fibers, etc., an impact resistance improving agent such as rubber, etc., according to the purposes.

For producing the composition of this invention, an optical method capable of melt-kneading the components can be used without any particular restriction. For example, an extruding machine, a roll mill, a Banbury mixer, a Brabender, etc., can be used.

The temperature is a temperature capable of sufficiently melting and kneading a polyphenylene ether and polyester, for example, a temperature of from 260 °C to 350 °C, preferably from 270 °C to 330 °C, and more preferably from 280 °C to 310 °C. If the temperature is less than 260 °C, the polyester is reluctant to melt and if the temperature is over 350 °C, the epoxy groups react with each other and the polymer formed gels, which is unsuitable for the purpose of this invention.

This invention will be explained in greater detail with reference to the following example, but the present invention should not be construed as being limited thereto.

A polyphenylene ether•polyester copolymer was prepared and the properties thereof were evaluated.

First, epoxidized polyphenylene ethers were prepared in following Production Examples 1 to 4, and then, polyphenylene ether•polyester copolymers were prepared from the epoxidized polyphenylene ethers and polyester in Examples 1 to 5 and the properties thereof were evaluated. Separately, polymer blends were prepared from a terminal unepoxidized polyphenylene ether and polyester in Comparison Examples 1 and 2, and the properties thereof were evaluated.

<u>Production Example 1 (Preparation of Epoxidized Polyphenylene Ether)</u>

In a dry flask were placed 100 parts by weight of a polyphenylene ether having an intrinsic viscosity (measured at 30 °C in the chloroform solution) of 0.29, made by Mitsubishi Petrochemical Company, Ltd., and 1,500 parts by weight of epichlorohydrin and the polyphenylene ether was dissolved in epichlorohydrin. Then, after adding a solution of 5 parts by weight of sodium hydroxide dissolved in 10 parts by weight of water to the solution, the temperature of the system was raised to 100 °C with stirring and the reaction was performed for 4 hours. Then, the reaction mixture was cooled to room temperature, methanol at a volume of twice the volume of epichlorohydrin was added to the reaction mixture to deposit a polymer, and then the polymer was collected by filtration, washed in succession with methanol, water, and then methanol, and dried for 8 hours at 150 °C under reduced pressure. When the unreacted phenol terminal group was determined by an ultraviolet absorption spectral method, it was confirmed that an epoxy group had been introduced in 84% phenol terminal group. The yield for the polymer was 92% and the polymer thus obtained was defined as Polymer (A).

<u>Production Example 2 (Preparation of Epoxidized Polyphenylene Ether)</u>

By following the same procedure as Production Example 1 except that the intrinsic viscosity of the polyphenylene ether was changed from 0.29 to 0.50, Polymer (B) was obtained. The yield for the polymer was 95% and the introduction ratio of epoxy group was 87%.

<u>Production Example 3 (Preparation of Epoxidized Polyphenylene Ether)</u>

By following the same procedure as Production Example 1 except that the amount of epichlorohydrin

was reduced from 1,500 parts by weight to 300 parts by weight and 1,200 parts by weight of toluene was added instead, Polymer (C) was obtained. The yield for the polymer was 87% and the introduced ratio of epoxy group was 66%.

Production Example 4 (Preparation of Epoxidized Polyphenylene Ether)

By following the same procedure as Production Example 3 except that the intrinsic viscosity of the polyphenylene ether was changed from 0.29 to 0.50, Polymer (D) was obtained. The yield for the polymer was 89% and the introduction ratio of epoxy group was 74%.

Examples 1 to 5 (Preparation of Polyphenylene Ether•Polyester Copolymers) and Comparison Examples 1 and 2

Each of the terminal epoxidized polyphenylene ethers (Polymers (A) to (D)) described in Production Examples 1 to 4 or a terminal unepoxidized polyphenylene ether (PPE) and a thermoplastic polyester having an intrinsic viscosity (measured at 30 °C using a mixture of phenol and tetrachloroethane at 1:1 by weight ratio) as shown in Table 1 (made by Kuraray Co., Ltd.) were placed in a Brabender set to 280 °C in the amounts shown in Table 1 described below and the mixture was preheated for 2 minutes and then melt-kneaded for 4 minutes.

A part of the product was sampled, the dispersed particle sizes thereof were measured by a scanning type electron microscope of 2,000 magnification, and MFR by a load of 5 kg at 280 °C was measured. Also, a part of a press sheet of each product was immersed in benzene at ordinary temperature of one hour and then the surface state thereof was observed. Furthermore, the Izod impact strength (ISO R180-1969 (JIS K-7110)) was measured. The results obtained are shown in Table 1 below. Also, the infrared absorption spectrum of the reaction product obtained in Example 1 is shown in the drawing.

TABLE 1

| | Polyphenylene Ether | | | | Polyester | | | | Dispersed Particle Size | MFR | Solvent***) Resistance (Benzene) | Izod Impact Strength |
|---|---|---|---|---|---|---|---|---|---|---|---|---|
| | Kind | Intrinsic Viscosity | MN**) | Composition (wt%) | Kind | Intrinsic Viscosity | MN**) | Composition (wt%) | (μ) | (g/10.min.) | | (kg·cm/cm) J/m |
| Example 1 | Polymer (A) | 0.29 | 7,400 | 29 | PET | 0.60 | 20,000 | 71 | 1-3 | 14.1 | ○ | (11.4) 111,80 |
| " 2 | " (B) | 0.50 | 14,000 | 45 | " | 0.60 | " | 55 | 0.5-3 | 5.7 | ○ | (6.3) 61,78 |
| " 3 | " (C) | 0.29 | 7,400 | 27 | " | 0.75 | 27,000 | 73 | 0.3-2 | 12.5 | ○ | (11.0) 107,88 |
| " 4 | " (D) | 0.50 | 14,000 | 44 | " | 0.75 | " | 56 | 0.5-2 | 4.3 | ○ | (6.5) 63,74 |
| " 5 | " (A) | 0.29 | 7,400 | 14 | " | 1.2 | 48,000 | 86 | 0.3-1 | 6.2 | ○ | (12.9) 126,51 |
| Comparison Example 1 | PPE*) | 0.50 | 14,000 | 60 | " | 0.60 | 20,000 | 40 | 5-15 | 28.1 | ○ | (2.1) 20,59 |
| " 2 | " | 0.50 | 14,000 | 60 | " | 1.2 | 48,000 | 40 | 3-6 | 7.6 | ○ | (3.2) 31,38 |

*): PPE Terminal Unepoxidized Polyphenylene Ether

**): MN Number Average Molecular Weight

***): ○ Surface State Unchanged

Resin compositions were prepared using the polyphenylene ether•polyester copolymers previously prepared and other polymers or using only the other polymers and the properties of the resin compositions obtained were evaluated.

First, polyphenylene ether•polyester copolymers were prepared in Production Examples 5 and 6, then desired resin compositions were prepared using these polyphenylene ether•polyester copolymers and the other polymers in Examples 6 to 11, or comparison resin compositions were prepared using only the other

polymers in Comparison Examples 3 and 4, and the properties of these resin compositions were evaluated.

Production Example 5 (Preparation of Polyphenylene Ether•Polyester Copolymer)

After mixing 100 parts by weight of the epoxidized polyphenylene ether (Polymer (A)) prepared in Production Example 1 described above and 100 parts by weight of a thermoplastic polyester made by Kuraray Co., Ltd., the mixture was preheated for 2 minutes and melt-kneaded for 4 minutes in a Brabender set to 280°C. Thereafter, the product was dispersed in xylene and stirred at a boiling point for one hour under refluxing. Then, the unreacted polyphenylene ether and the unreacted terminal epoxidized polyphenylene ether were removed, and the residue was dried for 8 hours at 150°C under reduced pressure to provide Copolymer (E).

Production Example 6 (Preparation of Polyphenylene Ether•Polyester Copolymer)

By following the same procedure as Production Example 5 except that the intrinsic viscosity of the polyphenylene ether used for preparing the epoxidized polyphenylene ether was changed from 0.29 to 0.50 and the amount of the thermoplastic polyester was changed from 100 parts by weight to 60 parts by weight, Copolymer (F) was obtained.

Examples 6 to 11 and Comparison Examples 3 and 4 (Preparation of Resin Compositions)

Polymers selected from a polyphenylene ether having an intrinsic viscosity (measured at 30°C in the chloroform solution) as shown in Table 2 described below (made by Mitsubishi Petrochemical Company, Ltd.)., a thermoplastic polyester having an intrinsic viscosity (measured at 30°C using a mixture of phenol and tetrachloroethane at 1:1 by weight ratio) as shown in Table 2, and the polyphenylene ether•polyester copolymers prepared in Production Example 5 or 6 (Copolymers (E) and (F)) were placed in a Brabender set to 280°C in the amounts shown in Table 2, and preheated for 2 minutes and melt-kneaded for 4 minutes.

A part of the blend thus obtained was sampled and the dispersed state was observed by a scanning electron microscope of 2,000 magnification. Also, a sheet of 3.2 mm in thickness was formed by press molding, a test piece was formed by cutting the sheet, and the Izod impact strength was measured. Also, the test piece was immersed in benzene for one hour at an ordinary temperature and then the surface state thereof was observed. The results obtained are shown in Table 2 below.

TABLE 2

| | Polyphenylene Ether | | Polyester | | EX-PPE/PET*) | | Dispersed Particle Size | Izod Impact Strength | Solvent**) Resistance (Benzene) | MFR |
|---|---|---|---|---|---|---|---|---|---|---|
| | Intrinsic Viscosity | Composition (wt%) | Intrinsic Viscosity | Composition (wt%) | Kind | Composition (wt%) | (μ) | (kg·cm/cm) J/m | | (g/10 min.) |
| Example 6 | 0.50 | 54 | 0.60 | 36 | Copolymer (E) | 10 | 1-5 | (3.7) 36,29 | ○ | 3.8 |
| " 7 | " | " | " | " | " (F) | " | 0.5-5 | (3.9) 38,25 | ○ | 3.5 |
| " 8 | " | " | 0.75 | " | " (E) | " | 0.5-3 | (5.5) 53,94 | ○ | 2.3 |
| " 9 | 0.40 | " | 0.60 | " | " (E) | " | 1-5 | (3.8) 37,27 | ○ | 4.4 |
| " 10 | 0.50 | 36 | " | 24 | " (F) | 40 | 0.5-4 | (5.8) 56,88 | ○ | 4.8 |
| " 11 | " | 24 | 0.75 | 56 | " (F) | 20 | 0.3-2 | (6.2) 60,80 | ○ | 6.3 |
| Comparison Example 3 | 0.50 | 60 | 0.60 | 40 | - | - | 5-15 | (2.1) 20.59 | ○ | 3.5 |
| " 4 | " | " | 0.75 | " | - | - | 3-8 | (3.5) 34.32 | ○ | 5.2 |

*) EX-PPE/PET; Polymer obtained by melt-kneading terminal epoxidized polyphenylene ether and polyester and then extracting off unreacted raw materials

**) ○; Surface state unchanged

## Claims

1. A resin composition containing a polyphenylene ether•polyester copolymer obtained by reacting a polyphenylene ether having epoxy group and a polyester,

wherein the reaction is a solution reaction or a melt reaction, the molten state reaction being carried out at a temperature of from 260 °C to 350 °C,
wherein the polyphenylene ether having epoxy group is prepared by epoxidizing a polyphenylene ether being based on at least one monocyclic phenol represented by formula I

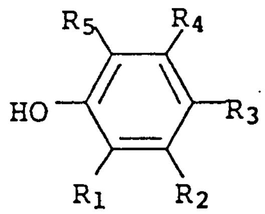

(I)

wherein $R_1$, $R_2$, $R_3$, $R_4$ and $R_5$ each represents a hydrogen, a halogenated hydrocarbon group, a hydrocarbon group or a substituted hydrocarbon group,
wherein said polyphenylene ether has an intrinsic viscosity (measured in chloroform at 30 °C) of from 0.10 to 0.60,
and wherein said polyester is a thermoplastic polyester having an intrinsic viscosity (measured at 30 °C in a mixture of phenol and tetrachloroethane at 1:1 by weight ratio) of from 0.35 to 1.5.

**2.** The resin composition as claimed in claim 1, wherein the polyphenylene ether having epoxy group is obtained by epoxidizing the hydroxy group at the terminal or terminals of a polyphenylene ether.

**3.** The resin composition as claimed in claim 1, wherein the polyphenylene ether having epoxy group and the polyester are reacted at a ratio that a carboxy group of the polyester is in the range of from 0.5 to 1.5 mol per mol of the epoxy group.

**4.** The resin composition as claimed in claim 3, wherein the carboxy group of the polyester is in the range of from 0.8 to 1.2 mol per mol of the epoxy group.

**5.** The resin composition as claimed in claim 1, wherein the intrinsic viscosity of the polyphenylene ether is from 0.20 to 0.57.

**6.** The resin composition as claimed in claim 1, wherein the intrinsic viscosity of the polyphenylene ether is from 0.25 to 0.55.

**7.** The resin composition as claimed in claim 1, wherein the intrinsic viscosity of the polyester is from 0.40 to 1.4.

**8.** A resin composition comprising from 2 to 80 parts by weight of a polyphenylene ether•polyester copolymer of claims 1 to 7, 10 to 80 parts by weight of a polyphenylene ether and/or a polyphenylene ether having epoxy group,
wherein the polyphenylene ether being compounded has an intrinsic viscosity (measured at 30 °C using chloroform as solvent) of from 0.15 to 0.65,
and 10 to 80 parts by weight of a thermoplastic polyester,
wherein the thermoplastic polyester being compounded has an intrinsic viscosity (measured at 30 °C using a mixture of phenol and tetrachloroethane at 1:1 by weight ratio) of from 0.50 to 1.50,
each per 100 parts by weight of the total amount of the polyphenylene ether•polyester copolymer, the polyphenylene ether and/or the polyphenylene ether having epoxy group and the polyester,
obtained by kneading the polyphenylene ether•polyester copolymer, the polyphenylene ether and/or the polyphenylene ether having epoxy group and the thermoplastic polyester at a temperature of from 260 °C to 350 °C.

**9.** The resin composition as claimed in claim 8, wherein the resin composition is obtained by kneading from 5 to 75 parts by weight of the polyphenylene ether•polyester copolymer, from 15 to 75 parts by weight of the polyphenylene ether and/or the polyphenylene ether having epoxy group, and from 15 to 75 parts by weight of the thermoplastic polyester, each per 100 parts by weight of the total amount of

the polyphenylene ether•polyester copolymer, the polyphenylene ether and/or the polyphenylene ether having epoxy group and the polyester.

**10.** The resin composition as claimed in claim 8, wherein the resin composition is obtained by kneading from 8 to 70 parts by weight of the polyphenylene ether•polyester copolymer, from 20 to 70 parts by weight of the polyphenylene ether and/or the polyphenylene ether having epoxy group, and from 20 to 70 parts by weight of the thermoplastic polyester, each per 100 parts by weight of the total amount of the polyphenylene ether•polyester copolymer, the polyphenylene ether and/or the polyphenylene ether having epoxy group and the polyester.

**11.** The resin composition as claimed in claims 8, wherein the intrinsic viscosity of the polyphenylene ether is from 0.3 to 0.6.

**12.** The resin composition as claimed in claim 8, wherein the intrinsic viscosity of the thermoplastic polyester is from 0.55 to 1.2.

**Revendications**

**1.** Une composition de résine contenant un copolymère Polyphénylèneéther-polyester obtenu par réaction d'un polyphénylèneéther ayant des groupes époxy et d'un polyester, la réaction étant une réaction en solution ou une réaction à l'état fondu, la réaction à l'état fondu étant mise en oeuvre à une température de 260° C à 350° C,
le polyphénylèneéther à groupes époxy étant préparé en époxydant un polyphénylèneéther à base d'au moins un phénol monocyclique représenté par la formule I

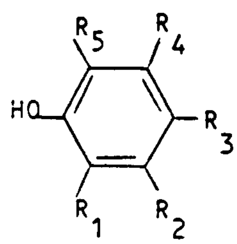

(I)

dans laquelle $R_1$, $R_2$, $R_3$, $R_4$ et $R_5$ représentent chacun un atome d'hydrogène, un groupe hydrocarboné halogéné, un groupe hydrocarboné ou un groupe hydrocarboné substitué,
ledit polyphénylèneéther ayant une viscosité intrinsèque (mesurée à 30° C dans le chloroforme) de 0,10 à 0,60,
et ledit polyester étant un polyester thermoplastique ayant une viscosité intrinsèque (mesurée à 30° C dans un mélange phénol-tétrachloroéthane 1:1 en poids) de 0,35 à 1,5.

**2.** La composition de résine selon la revendication 1, dans laquelle le polyphénylèneéther à groupes époxy est obtenu en époxydant les groupes hydroxy à l'extrémité ou aux extrémités d'un polyphénylèneéther.

**3.** La composition de résine selon la revendication 1, dans laquelle le polyphénylèneéther à groupes époxy et le polyester sont mis à réagir dans un rapport molaire des groupes carboxy du polyester aux groupes époxy dans l'intervalle de 0,5 à 1,5.

**4.** La composition de résine selon la revendication 3, dans laquelle le rapport molaire des groupes carboxy du polyester aux groupes époxy est dans l'intervalle de 0,8 à 1,2.

**5.** La composition de résine selon la revendication 1, dans laquelle la viscosité intrinsèque du polyphénylèneéther est de 0,20 à 0,57.

**6.** La composition de résine selon la revendication 1, dans laquelle la viscosité intrinsèque du polyphénylèneéther est de 0,25 à 0,55.

7. La composition de résine selon la revendication 1, dans laquelle la viscosité intrinsèque du polyester est de 0,40 à 1,4.

8. Une composition de résine comprenant de 2 à 80 parties en poids d'un copolymère polyphénylèneéther-polyester selon les revendications 1 à 7, 10 à 80 parties en poids d'un polyphénylèneéther et/ou d'un polyphénylèneéther à groupes époxy,
dans lequel le polyphénylèneéther combiné a une viscosité intrinsèque (mesurée à 30 °C dans le chloroforme comme solvant) de 0,15 à 0,65,
et 10 à 80 parties en poids d'un polyester thermoplastique, dans lequel le polyester thermoplastique combiné a une viscosité intrinsèque (mesurée à 30 °C dans un mélange phénol-tétrachloroéthane 1:1 en poids) de 0,50 à 1,50,
chacun pour 100 parties en poids de la quantité totale du copolymère polyphénylèneéther-polyester, du polyphénylèneéther et/ou du polyphénylèneéther à groupes époxy et du polyester,
obtenue par malaxage du copolymère polyphénylèneéther-polyester, du polyphénylèneéther et/ou du polyphénylèneéther à groupes époxy et du polyester thermoplastique à une température de 260 °C à 350 °C.

9. La composition de résine selon la revendication 8, dans laquelle la composition de résine est obtenue en malaxant de 5 à 75 parties en poids du copolymère polyphénylèneéther-polyester, de 15 à 75 parties en poids du polyphénylèneéther et/ou du polyphénylèneéther à groupes époxy et de 15 à 75 parties en poids du polyester thermoplastique, chacun pour 100 parties en poids de la quantité totale du copolymère polyphénylèneéther-polyester, du polyphénylèneéther et/ou du polyphénylèneéther à groupes époxy et du polyester.

10. La composition de résine selon la revendication 8, dans laquelle la composition de résine est obtenue en malaxant de 8 à 70 parties en poids du copolymère polyphénylèneéther-polyester, de 20 à 70 parties en poids du polyphénylèneéther et/ou du polyphénylèneéther à groupes époxy et de 20 à 70 parties en poids du polyester thermoplastique, chacun pour 100 parties en poids de la quantité totale du copolymère polyphénylèneéther-polyester, du polyphénylèneéther et/ou du polyphénylèneéther à groupes époxy et du polyester.

11. La composition de résine selon la revendication 8, dans laquelle la viscosité intrinsèque du polyphénylèneéther est de 0,3 à 0,6.

12. La composition de résine selon la revendication 8, dans laquelle la viscosité intrinsèque du polyester thermoplastique est de 0,55 à 1,2.

**Patentansprüche**

1. Harzzusammensetzung, enthaltend ein Polyphenylenether-Polyester-Copolymer, erhalten durch Umsetzen eines Polyphenylenethers mit Epoxygruppe mit einem Polyester, wobei die Reaktion eine Lösungsreaktion oder Schmelzreaktion ist, die Reaktion in geschmolzenem Zustand bei einer Temperatur von 260 bis 350 °C durchgeführt wird, wobei der Polyphenylenether mit Epoxygruppe durch Epoxidieren eines Polyphenylenethers hergestellt ist, der Polyphenylenether auf mindestens einem monozyklischen Phenol, dargestellt durch die Formel (I)

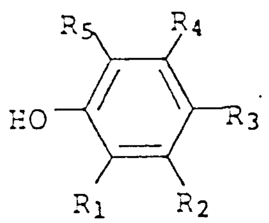

(I)

in der $R_1$, $R_2$, $R_3$, $R_4$ und $R_5$ jeweils
Wasserstoff, eine halogenierte Kohlenwasserstoffgruppe, eine Kohlenwasserstoffgruppe oder eine sub-stituierte Kohlenwasserstoffgruppe darstellen, basiert, wobei der Polyphenylenether eine Grundviskosität (gemessen in Chloroform bei 30 ° C) von 0,1 bis 0,60 hat, und wobei der Polyester ein thermoplastischer Polyester mit einer Grundviskosität (gemessen bei 30 ° C in einer Mischung aus Phenol und Tetrachlorethan in einem Gew.-Verhältnis von 1:1) von 0,35 bis 1,5 ist.

**2.** Harzzusammensetzung nach Anspruch 1, bei der der Polyphenylenether mit Epoxygruppe durch Epoxidieren der Hydroxygruppe am Ende oder an den Enden eines Polyphenylenethers erhalten ist.

**3.** Harzzusammensetzung nach Anspruch 1, bei der der Polyphenylenether mit Epoxygruppe und der Polyester in einem solchen Verhältnis umgesetzt sind, dass die Carboxygruppe des Polyesters im Bereich von 0,5 bis 1,5 Mol/Mol Epoxygruppe liegt.

**4.** Harzzusammensetzung nach Anspruch 3, bei der die Carboxygruppe des Polyesters im Bereich von 0,8 bis 1,2 Mol/Mol Epoxygruppe liegt.

**5.** Harzzusammensetzung nach Anspruch 1, bei der die Grundviskosität des Polyphenylenethers im Bereich von 0,2 bis 0,57 liegt.

**6.** Harzzusammensetzung nach Anspruch 1, bei der die Grundviskosität des Polyphenylenethers im Bereich von 0,25 bis 0,55 liegt.

**7.** Harzzusammnensetzung nach Anspruch 1, bei der die Grundviskosität des Polyesters im Bereich von 0,4 bis 1,4 liegt.

**8.** Harzzusammensetzung, umfassend 2 bis 80 Gew.-Teile eines Polyphenylenether-Polyester-Copolymers gemäss den Ansprüchen 1 bis 7, 10 bis 80 Gew.-Teile eines Polyphenylenethers und/oder eines Polyphenylenethers mit Epoxygruppe, wobei der Polyphenylenether, der eingemischt ist, eine Grundviskosität (gemessen bei 30 ° C unter Verwendung von Chloroform als Lösungsmittel) von 0,15 bis 0,65 hat, und 10 bis 80 Gew.-Teile eines thermoplastischen Polyesters, wobei der thermoplastische Polyester, der eingemischt ist, eine Grundviskosität (gemessen bei 30 ° C unter Verwendung einer Mischung aus Phenol und Tetrachlorethan im Gew.-Verhältnis von 1:1) von 0,5 bis 1,50 hat, wobei sich jede Angabe auf 100 Gew.-Teile der Gesamtmenge aus Polyphenylenether-Polyester-Copolymer, Polyphenylenether und/oder Polyphenylenether mit Epoxygruppe und Polyester bezieht, erhalten durch Kneten des Polyphenylenether-Polyester-Copolymers, des Polyphenylenethers und/oder des Polyphenylenethers mit Epoxygruppe und des thermoplatischen Polyesters bei einer Temperatur von 260 bis 350 ° C.

**9.** Harzzusammensetzung nach Anspruch 8, bei der die Harzzusammensetzung durch Kneten von 5 bis 75 Gew.-Teilen Polyphenylenether-Polyester-Copolymer, 15 bis 75 Gew.-Teilen Polyphenylenether und/oder Polyphenylenether mit Epoxygruppe und 15 bis 75 Gew.-Teilen thermoplastischem Polyester erhalten ist, wobei jede Angabe sich auf 100 Gew.-Teile der Gesamtmenge aus Polyphenylenether-Polyester-Copolymer, Polyphenylenether und/oder Polyphenylenether mit Epoxygruppe und Polyester bezieht.

**10.** Harzzusammensetzung nach Anspruch 8, bei der die Harzzusammensetzung durch Kneten von 8 bis 70 Gew.-Teilen Polyphenylenether-Polyester-Copolymer, 20 bis 70 Gew.-Teilen Polyphenylenether und/oder Polyphenylenether mit Epoxygruppe und 20 bis 70 Gew.-Teilen thermoplastischem Polyester erhalten ist, wobei jede Angabe sich auf 100 Gew.-Teile der Gesamtmenge aus Polyphenylenether-Polyester-Copolymer, Polyphenylenether und/oder Polyphenylenether mit Eoxygruppe und Polyester bezieht.

**11.** Harzzusammensetzung nach Anspruch 8, bei der die Grundviskosität des Polyphenylenethers 0,3 bis 0,6 beträgt.

**12.** Harzzusammensetzung nach Anspruch 8, bei der die Grundviskosität des thermoplastischen Polyesters 0,55 bis 1,2 beträgt.

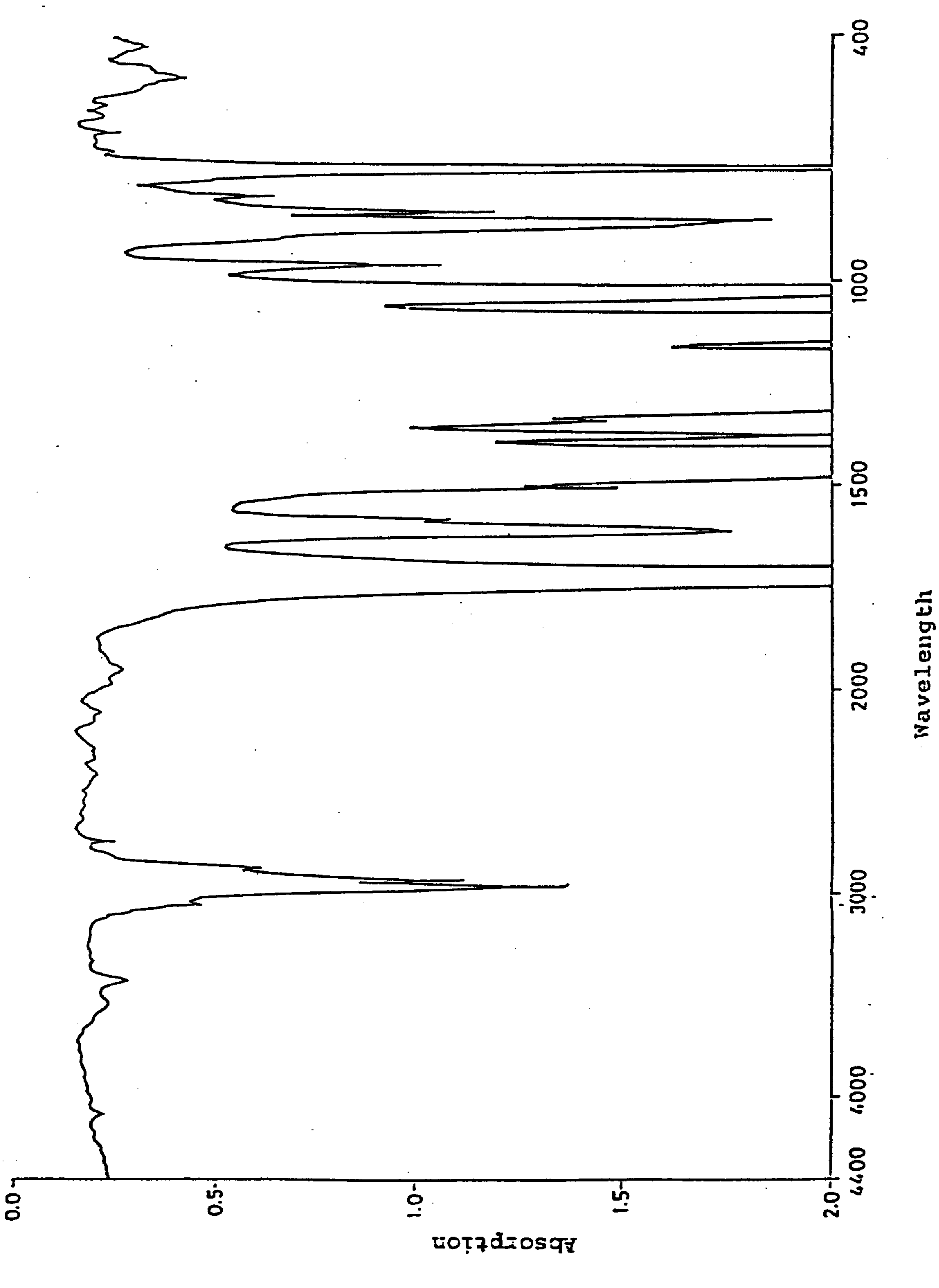
Absorption
0.0
0.5
1.0
1.5
2.0
Wavelength
4400
4000
3000
2000
1500
1000
400